# EUROPÄISCHE PATENTANMELDUNG

(11) **EP 4 447 313 A1**
(43) Veröffentlichungstag der Anmeldung: **16.10.2024**
(21) Anmeldenummer: 23168087.7
(22) Anmeldetag: 14.04.2023
(51) Int. Cl.: H02S 20/26

(54) **TERRASSENÜBERDACHUNG MIT SEITENWANDELEMENTEN MIT PHOTOVOLTAIKMODULEN**

(71) Anmelder: Weinor GmbH & Co. KG, 50829 Köln (DE)
(72) Erfinder: Stawski, Karl-Heinz, 50769 Köln (DE); Klatt, Alexander, 51491 Overath (DE)
(74) Vertreter: Patentanwaltskanzlei Methling

(57) **Zusammenfassung**

Die Erfindung betrifft eine Terrassenüberdachung (1) mit einem aus mehreren Trägern (3, 4) gebildeten Rahmen, der eines oder mehrere Dachelemente aufnimmt, wobei die Terrassenüberdachung (1) zumindest ein Seitenwandelement (30) aufweist, wobei das zumindest eine Seitenwandelement (30) zumindest ein integriertes Photovoltaikmodul (40) aufweist oder durch ein Photovoltaikmodul (40) gebildet ist.

## Beschreibung

Die Erfindung betrifft eine Terrassenüberdachung mit einem aus mehreren Trägern gebildeten Rahmen, der eines oder mehrere Dachelemente aufnimmt, wobei die Terrassenüberdachung zumindest ein Seitenwandelement aufweist.

Derartige Terrassenüberdachungen sind bekannt. Dabei werden den Terrassenüberdachungen vielfach Seitenwandelemente zugeordnet, um den Raum unter der Überdachung nach außen abzugrenzen.

Ferner ist es bekannt, dass es erstrebenswert ist, die für die Anbringung von Photovoltaikmodulen verfügbare Fläche möglichst zu vergrößern.

Die Aufgabe der Erfindung ist es, eine gattungsgemäße Terrassenüberdachung derart weiterzubilden, so dass die für die Anbringung von Photovoltaikmodulen verfügbare Fläche vergrößert und möglichst optimal genutzt wird.

Diese Aufgabe wird erfindungsgemäß durch eine Terrassenüberdachung gemäß Anspruch 1 gelöst. Vorteilhafte Weiterbildungen der Erfindung sind in den Unteransprüchen angegeben.

Besonders vorteilhaft bei der Terrassenüberdachung mit einem aus mehreren Trägern gebildeten Rahmen, der eines oder mehrere Dachelemente aufnimmt, wobei die Terrassenüberdachung zumindest ein Seitenwandelement aufweist, ist es, dass das zumindest eine Seitenwandelement zumindest ein integriertes Photovoltaikmodul aufweist oder durch ein Photovoltaikmodul gebildet ist.

Dadurch dass es erfindungsgemäß vorgesehen ist, dass das zumindest eine Seitenwandelement zumindest ein integriertes Photovoltaikmodul aufweist oder durch ein Photovoltaikmodul gebildet ist, wird die die Anbringung von Photovoltaikmodulen verfügbare Fläche optimiert und die Nutzung von Solarenergie erleichtert.

Dadurch, dass die Terrassenüberdachung zumindest ein Seitenwandelement aufweist, welches wiederum selbst ein integriertes Photovoltaikmodul aufweist oder durch ein integriertes Photovoltaikmodul gebildet ist, wird die für die Erzeugung von Strom mittels Photovoltaik nutzbare Fläche vergrößert und somit der Ertrag gesteigert.

Insbesondere kann die Terrassenüberdachung eines oder mehrere Seitenwandelemente an mehreren Seiten aufweisen, wobei die Seitenwandelemente jeweils zumindest ein Photovoltaikmodul aufweisen. Es können somit auch zu mehreren Seiten in die Seitenwandelemente integrierte Photovoltaikmodule angeordnet sein und die zur Stromerzeugung nutzbare Fläche weiter vergrößert werden.

Vorzugsweise sind mehrere Photovoltaikmodule auf der Dachfläche und/oder an Seitenwandelementen in Reihe geschaltet, insbesondere mit einer Spannung von bis zu 120 V. Eine maximale Spannung von 120 V ist vorteilhaft, da eine höhere Gleichspannung lebensgefährlich sein kann.

Bevorzugt bilden eines oder mehrere Seitenwandelemente eine Brüstung, insbesondere umlaufende Brüstung, welche den Raum unter der Terrassenüberdachung umschließt und gegenüber der Umgebung abgrenzt.

Vorzugsweise bilden eines oder mehrere Seitenwandelemente eine Brüstung, wobei die Brüstung ein lastabtragendes Bauteil der Terrassenüberdachung bildet, insbesondere dass oberhalb der Brüstung Glaselemente und/oder Dreh-/Schiebeelemente und/oder Vertikallamellen und/oder Beschattungselemente angeordnet sind, deren statische und dynamische Last zumindest teilweise von der Brüstung aufgenommen wird.

Durch die Ausbildung der Seitenwandelemente als tragende Bauteile der Terrassenüberdachung wird die Statik der gesamten Anordnung verbessert und es insbesondere ermöglicht, die statische und dynamische Last von optional oberhalb der Seitenwandelemente angeordneten weiteren Bauelementen wie Glasscheiben, Dreh-Schiebeelemente und dergleichen zumindest teilweise aufzunehmen und abzuleiten, d.h. sowohl die statische Last aufgrund des Eigengewischtes der Bauelementen wie Glasscheiben, Dreh-Schiebeelemente, etc., als auch die dynamische Last bei auftretenden Windlasten.

Vorzugsweise weist die Terrassenüberdachung zumindest einen integrierten Wechselrichter und/oder zumindest einen Akkumulator auf, der von dem/den Photovoltaikmodul/e gespeist wird auf, insbesondere kann ein Träger und/oder ein Pfosten der Terrassenüberdachung zumindest einen integrierten Wechselrichter und/oder zumindest einen Akkumulator aufweisen.

Durch die Integration zumindest eines Wechselrichters kann ein unmittelbarer Anschluss an ein Gebäudeenergienetz erfolgen und/oder eine Wechselspannungssteckdose und/oder ein Wechselspannungsverbraucher unmittelbar versorgt werden.

Vorzugsweise wird der Rahmen von mehreren Pfosten getragen, insbesondere können die Pfosten integrierte Kabelkanäle zur Aufnahme von Anschlusskabeln des/der Photovoltaikmodul/e und/oder zumindest eine Steckdose aufweisen, insbesondere zumindest eine Gleichspannungssteckdose mit einer Betriebsspannung von 12 V oder von 24 V und/oder zumindest eine Wechselspannungssteckdose mit einer Betriebsspannung von bis zu 230 V

Durch eine Integration einer oder mehrerer Gleichspannungssteckdosen und/oder Wechselspannungssteckdosen kann ein unmittelbarer Anschluss von Verbrauchern an der Terrassenüberdachung erfolgen, wie beispielsweise von Ladegeräten und/oder mobiler Mobilfunkendgeräten, Radios, Lampen und dergleichen.

Vorzugsweise werden die Photovoltaikmodule der Seitenwandelemente von Glashalteleisten gehalten, wobei die Glashalteleisten integrierte Kabelkanäle zur Aufnahme von Anschlusskabeln der Photovoltaikmodule aufweisen und/oder wobei die Glashalteleisten zumindest abschnittsweise als Stromschienen ausgebildet sind.

Dadurch, dass die die Glashalteleisten integrierte Kabelkanäle zur Aufnahme von Anschlusskabeln des/der Photovoltaikmodul/e aufweisen und/oder dass die Glashalteleisten zumindest abschnittsweise als Stromschienen ausgebildet sind, ist ein Anschluss der Photovoltaikmodule auf eine besonders leichte und vorteilhafte Weise möglich, wobei ein insgesamt optisch besonders vorteilhafter Gesamteindruck geschaffen wird und keine optisch störenden Kabel oder zusätzliche beispielsweise an den Pfosten angebrachte Kabelkanäle des Gesamteindruck stören.

Insbesondere können die Glashalteleisten als ein Stecksystem ausgebildet sein, sodass mehrere Glashalteleisten ineinandergesteckt werden können, um die gewünschte und benötigte Gesamtlänge der Glashalteleisten zu realisieren.

Sofern die Glashalteleisten zumindest abschnittsweise als Stromschienen ausgebildet sind, ist eine besonders einfache Installation der Photovoltaikmodule möglich. Die Photovoltaikmodule sind in diesem Fall an den Kanten mit entsprechenden elektrisch leitenden Anschlussbereichen versehen und werden bei der Montage in den Glashalteleisten automatisch über die als Stromschienen ausgebildeten Glashalteleisten elektrisch leitend angeschlossen.

Bevorzugt ist der Rahmen mittels eines Wandanschlussprofils an einer Gebäudewand befestigbar, wobei das Wandanschlussprofil zumindest einen integrierten Wechselrichter aufweist. Durch die Integration zumindest eines Wechselrichters in ein solches Wandanschlussprofil zur Befestigung der Terrassenüberdachung an einer Gebäudewand kann ein unmittelbarer Anschluss an ein Gebäudeenergienetz erfolgen und/oder eine Wechselspannungssteckdose und/oder ein Wechselspannungsverbraucher unmittelbar versorgt werden.

Bevorzugt sind einzelne oder mehrere Dachelemente durch Lamellen gebildet, die an dem Rahmen jeweils um eine Drehachse verschwenkbar gelagert sind, wobei die Lamellen von einer Schließstellung, in der die Lamellen eine geschlossene Dachfläche bilden, in eine insbesondere beliebige Öffnungsstellung verschwenkbar sind.

Insbesondere können die Lamellen einen Teil der Dachfläche oder die vollständige Dachfläche bilden. Insbesondere können die Lamellen Photovoltaikmodule aufweisen. Insbesondere kann ein Antrieb der Lamellen von einem in die Terrassenüberdachung integrierten Akkumulator gespeist werden, wobei der Akkumulator von den Photovoltaikmodulen geladen wird.

Sofern die Lamellen einen Teil der Dachfläche bilden und ferner Dachelemente mit integrierten Photovoltaikmodulen einen weiteren Teil der Dachfläche bilden, können verschiedene Vorteilhafte Eigenschaften kombiniert werden. So ist es durch die Anordnung einiger drehbarer Lamellen, die einen Teil der Dachfläche bilden, möglich, den Raum unterhalb der Terrassenüberdachung durch eine Öffnung der Lamellen schlagartig zu belüften und aufgeheizte Stauluft entweichen zu lassen. Hierdurch wird die Aufenthaltsqualität unter der Terrassenüberdachung gesteigert und es ist eine Belüftung möglich.

Bevorzugt sind an dem Rahmen mehrere Dachelemente mit integrierten Dachflächenphotovoltaikmodulen oder mehrere Dachflächenphotovoltaikmodule angeordnet, die von an Sparren angeordneten Glashalteleisten aufgenommen sind, wobei die Dachelemente einen Teil der Dachfläche oder die vollständige Dachfläche bilden und die Glashalteleisten integrierte Kabelkanäle zum Anschluss der Dachflächenphotovoltaikmodule aufweisen und/der wobei die Glashalteleisten zumindest abschnittsweise als Stromschienen ausgebildet sind. Dadurch, dass die die Glashalteleisten integrierte Kabelkanäle zur Aufnahme von Anschlusskabeln des/der Photovoltaikmodul/e aufweisen und/oder dass die Glashalteleisten zumindest abschnittsweise als Stromschienen ausgebildet sind, ist ein Anschluss der Photovoltaikmodule auf eine besonders leichte und vorteilhafte Weise möglich, wobei ein insgesamt optisch besonders vorteilhafter Gesamteindruck geschaffen wird und keine optisch störenden Kabel oder zusätzliche beispielsweise an den Sparren angebrachte Kabelkanäle des Gesamteindruck stören.

Insbesondere können die Glashalteleisten als ein Stecksystem ausgebildet sein, sodass mehrere Glashalteleisten ineinandergesteckt werden können, um die gewünschte und benötigte Gesamtlänge der Glashalteleisten zu realisieren.

Sofern die Glashalteleisten zumindest abschnittsweise als Stromschienen ausgebildet sind, ist eine besonders einfache Installation der Photovoltaikmodule möglich. Die Photovoltaikmodule sind in diesem Fall an den Kanten mit entsprechenden elektrisch leitenden Anschlussbereichen versehen und werden bei der Montage in den Glashalteleisten automatisch über die als Stromschienen ausgebildeten Glashalteleisten elektrisch leitend angeschlossen.

Vorzugsweise sind an dem Rahmen mehrere Dachelemente mit integrierten Dachflächenphotovoltaikmodulen oder mehrere Dachflächenphotovoltaikmodule befestigt sind, wobei mehrere Dachflächenphotovoltaikmodule in Reihe geschaltet sind, insbesondere mit einer Spannung von bis zu 120 V. Eine maximale Spannung von 120 V ist vorteilhaft, da eine höhere Gleichspannung wie oben erläutert lebensgefährlich sein kann.

Vorzugsweise weist die Terrassenüberdachung zumindest einen Akkumulator auf, der von dem/den Photovoltaikmodul/e gespeist wird. Durch die Integration einer solchen Speichereinheit zur Speicherung elektrischer Energie wird die Nutzbarkeit der mittels der Photovoltaikmodule erzeugten elektrischen Energie verbessert, da die gespeicherte Energie in zeitlichem Abstand zu ihrer Erzeugung genutzt werden kann, beispielsweise um nach Sonnenuntergang eine Beleuchtung mit elektrischer Energie zu versorgen.

Bevorzugt ist an der Terrassenüberdachung zumindest ein elektrisch angetriebenes Sonnenschutzelement angeordnet, dessen elektrischer Antrieb von einem in die Terrassenüberdachung integrierten Akkumulator gespeist wird, wobei der Akkumulator von den Photovoltaikmodulen geladen wird. Durch eine solche Ausgestaltung wird der Antrieb eines elektrisch angetriebenen Sonnenschutzelementes ermöglicht, ohne dass die Terrassenüberdachung mit einem elektrisch angetriebenen Sonnenschutzelement zwingend an ein elektrisches Versorgungsnetz angeschlossen werden muss. Hierdurch kann der Installationsaufwand erheblich verringert werden.

Vorzugsweise weist die Terrassenüberdachung zumindest eine integrierte Steckdose zum Anschluss elektrischer Verbraucher auf, wobei die Steckdose von einem in die Terrassenüberdachung integrierten Akkumulator gespeist wird, wobei der Akkumulator von den Photovoltaikmodulen geladen wird, und/oder wobei die Steckdose unmittelbar von den Photovoltaikmodulen gespeist wird, insbesondere über zumindest einen in die Terrassenüberdachung integrierten Wechselrichter mit einer Wechselspannung von bis zu 230 V.

Bevorzugt weist die die Terrassenüberdachung zumindest einen elektrischen Verbraucher auf, der unmittelbar von den Photovoltaikmodulen gespeist wird und/oder der von zumindest einem in die Terrassenüberdachung integrierten Akkumulator gespeist wird, wobei der Akkumulator von den Photovoltaikmodulen geladen wird.

Insbesondere kann es sich dem elektrischen Verbraucher um einen oder mehrere in die Dachfläche integrierte Lüfter und/oder eine Klimatisierungseinheit zur Klimatisierung des Raumes unter der Terrassenüberdachung handeln. Durch die Anordnung von Lüftern und/oder einer Klimatisierungseinheit kann zum einen der Raum unterhalb der Terrassenüberdachung gekühlt und hierdurch die Aufenthaltsqualität gesteigert werden. Ein Nebeneffekt ist dabei die Kühlung der Photovoltaikmodule bei starker Sonneneinstrahlung, wodurch der Wirkungsgrad der Photovoltaikmodule durch die Kühlung gesteigert wird.

Besonders bevorzugt weist die Terrassenüberdachung zumindest eine Beleuchtungseinrichtung und/oder zumindest einen WLAN-Repeater auf, die/der unmittelbar von den Photovoltaikmodulen gespeist wird und/oder die/der von zumindest einem in die Terrassenüberdachung integrierten Akkumulator gespeist wird, wobei der Akkumulator von den Photovoltaikmodulen geladen wird. Durch die Anordnung einer oder mehrerer Beleuchtungseinrichtungen kann der Raum unter der Terrassenüberdachung beleuchtet werden. Bei einer Speisung dieser Beleuchtungseinrichtungen über einen integrierten Akkumulator, also einer Speichereinheit zur Speicherung elektrischer Energie, kann eine Beleuchtung zeitversetzt zur Erzeugung der elektrischen Energie beispielsweise nach Sonnenuntergang erfolgen.

Ein WLAN-Repeater dient der Erhöhung der Reichweite eines drahtlosen Funknetzes. Durch die Anordnung eines WLAN-Repeaters, der von zumindest einem in die Terrassenüberdachung integrierten Akkumulator gespeist wird, wobei der Akkumulator von den Photovoltaikmodulen geladen wird, ist eine Erweiterung eines lokalen Funknetzes auf den Bereich unterhalb sowie in der Nähe der Terrassenüberdachung möglich.

Mehrere Ausführungsbeispiele der Erfindung sind in den Figuren dargestellt und wird nachfolgend näher erläutert. Es zeigen:
- Fig. 1: eine perspektivische Ansicht eines ersten Ausführungsbeispiels einer Terrassenüberdachung;
- Fig. 2: eine perspektivische Ansicht eines zweiten Ausführungsbeispiels einer Terrassenüberdachung;

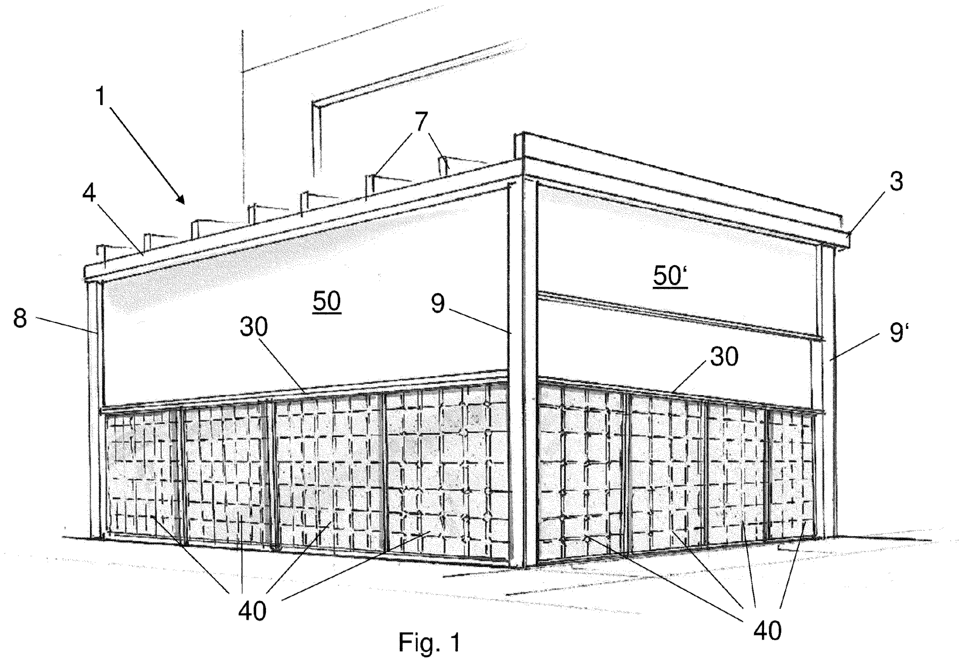

Fig. 1 zeigt eine perspektivische Ansicht eines ersten Ausführungsbeispiels einer Terrassenüberdachung 1.

Die Terrassenüberdachung 1 weist einen Rahmen auf, der durch die Längsträger, von denen in dieser Perspektive nur der rechte Längsträger 3 sichtbar ist, sowie den vorderen Querträger 4 und einen hinteren Querträger gebildet ist. Die Bezeichnungen vorne und hinten beziehen sich dabei auf die Darstellung gemäß Figur 1 und dienen nur der Erläuterung.

Der Rahmen wird getragen von den senkrechten Pfosten 8, 9, 9`. Die Terrassenüberdachung 1 schließt sich rückseitig an ein im Hintergrund angedeutetes Gebäude an. Der vordere Querträger 4 wird getragen von vorderen Stützpfosten 8, 9. Der hintere Querträger wird von hinteren Pfosten 9` getragen und ist mittels eines Wandanschlussprofils an einer Gebäudewand befestigt.

Von dem vorderen Querträger 4 und dem hinteren Querträger, der in dieser Perspektive nicht sichtbar ist, werden die Sparren 7 getragen. Die Sparren 7 liegen auf dem vorderen Querträger 4 auf und werden des Weiteren an ihrem hinteren Ende von dem hinteren Querträger getragen.

Zwischen den senkrechten Pfosten 8, 9, 9` sind Seitenwandelemente 30 angeordnet, die eine umlaufende Brüstung bilden. Die Seitenwandelemente 30 weisen jeweils mehrere Photovoltaikmodule 40 auf. Die Photovoltaikmodule 40 sind mittels Glashalteleisten an den Seitenwandelementen 30 befestigt, wobei die Glashalteleisten als Stromschienen ausgebildet sind.

Die Glashalteleisten sind als Stromschienen ausgebildet und dienen somit neben der Befestigung der Photovoltaikmodule 40 gleichzeitig dem elektrischen Anschluss der Photovoltaikmodule 40. Die Photovoltaikmodule 40 sind dabei in Reihe geschaltet. Der mittels der Photovoltaikmodule 40 erzeugte Gleichstrom wird über die als Stromschienen ausgebildeten Glashalteleisten zu einem in die Terrassenüberdachung 1 integrierten Akkumulator geleitet und der Akkumulator hierdurch automatisch geladen.

Oberhalb der Seitenwandelemente 30 sind zwei Senkrechtbeschattungen 50 angeordnet, mit denen sich der Raum unterhalb der Terrassenüberdachung vor Wind und Sonne zusätzlich schützen lässt. Die an dem vorderen Querträger 4 angebrachte Senkrechtbeschattung 50 ist vollständig ausgefahren, während die am Längsträger 3 angebrachte Senkrechtbeschattung 50 nur teilweise ausgefahren ist.

Die Senkrechtbeschattungen 50 weisen ein nach unten ausfahrbares Ausfahrprofil auf, welches seitlich an senkrechten Führungen geführt wird.

Die Seitenwandelemente 30 sind als lastabtragende Bauteile der Terrassenüberdachung 1 ausgebildet und nehmen die statische und dynamische Last der Senkrechtbeschattungen 50 auf, d.h. insbesondere die dynamische Last bei auftreffenden Windlasten.

Der elektrische Antrieb der Senkrechtbeschattungen 50 wird von dem in die Terrassenüberdachung 1 integrierten Akkumulator mit elektrischer Energie versorgt. Hierdurch ist ein Anschluss an ein elektrisches Versorgungsnetz entbehrlich.

Ferner weist die Terrassenüberdachung 1 einen integrierten Wechselrichter auf, mittels dessen der von den Photovoltaikmodulen 40 erzeugte Gleichstrom in Wechselstrom gewandelt wird. Weiter ist an einem Pfosten 8, 9, 9` der Terrassenüberdachung 1 eine Steckdose angeordnet, die mit 230 V Wechselstrom zum Anschluss eines elektrischen Verbrauchers beaufschlagt ist und die direkt über die Photovoltaikmodule und/oder über einen in die Terrassenüberdachung 1 integrierten Akkumulator mit elektrischer Energie versorgt wird.

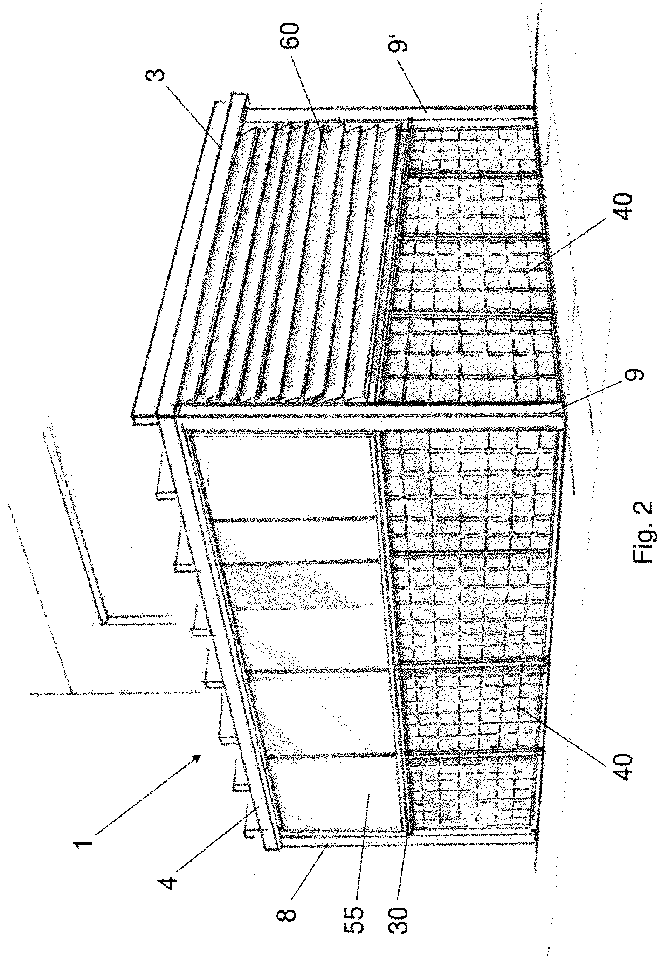

Fig. 2 zeigt eine perspektivische Ansicht eines zweiten Ausführungsbeispiels einer Terrassenüberdachung 1.

Die Terrassenüberdachung 1 weist grundsätzlich denselben Aufbau auf, wie das zuvor erläuterte Ausführungsbeispiel.

Die Terrassenüberdachung 1 weist einen Rahmen auf, der durch die Längsträger, von denen in dieser Perspektive nur der rechte Längsträger 3 sichtbar ist, sowie den vorderen Querträger 4 und einen hinteren Querträger gebildet ist. Die Bezeichnungen vorne und hinten beziehen sich dabei auf die Darstellung gemäß Figur 2 und dienen nur der Erläuterung.

Der Rahmen wird getragen von den senkrechten Pfosten 8, 9, 9`. Die Terrassenüberdachung 1 schließt sich rückseitig an ein im Hintergrund angedeutetes Gebäude an. Der vordere Querträger 4 wird getragen von vorderen Stützpfosten 8, 9. Der hintere Querträger wird von hinteren Pfosten 9` getragen und ist mittels eines Wandanschlussprofils an einer Gebäudewand befestigt.

Von dem vorderen Querträger 4 und dem hinteren Querträger, der in dieser Perspektive nicht sichtbar ist, werden die Sparren 7 getragen. Die Sparren 7 liegen auf dem vorderen Querträger 4 auf und werden des Weiteren an ihrem hinteren Ende von dem hinteren Querträger getragen.

Zwischen den senkrechten Pfosten 8, 9, 9` sind Seitenwandelemente 30 angeordnet, die eine umlaufende Brüstung bilden. Die Seitenwandelemente 30 weisen jeweils mehrere Photovoltaikmodule 40 auf. Die Photovoltaikmodule 40 sind mittels Glashalteleisten an den Seitenwandelementen 30 befestigt, wobei die Glashalteleisten als Stromschienen ausgebildet sind.

Die Glashalteleisten sind als Stromschienen ausgebildet und dienen somit neben der Befestigung der Photovoltaikmodule 40 gleichzeitig dem elektrischen Anschluss der Photovoltaikmodule 40. Die Photovoltaikmodule 40 sind dabei in Reihe geschaltet. Der mittels der Photovoltaikmodule 40 erzeugte Gleichstrom wird über die als Stromschienen ausgebildeten Glashalteleisten zu einem in die Terrassenüberdachung 1 integrierten Akkumulator geleitet und der Akkumulator hierdurch automatisch geladen.

Oberhalb des vorderen Seitenwandelementes 30 sind verschiebbare Glaselemente 55 angeordnet, mit denen sich der Raum unterhalb der Terrassenüberdachung vor Wind und Regen zusätzlich schützen lässt. Die statische und dynamische Last der Glaselemente 55 wird von dem Seitenwandelement 30 aufgenommen und abgetragen, d.h. sowohl die statische Last aufgrund des Eigengewischtes der Glaselemente 55, als auch die dynamische Last bei auftretenden Windlasten.

Oberhalb des rechten Seitenwandelementes 30 ist eine Vertikallamellenanlage 60 angeordnet, mit der sich der Raum unterhalb der Terrassenüberdachung vor Sonne, Wind und Regen zusätzlich schützen lässt. Die statische und dynamische Last der Vertikallamellenanlage 60 wird von dem Seitenwandelement 30 aufgenommen und abgetragen, d.h. sowohl die statische Last aufgrund des Eigengewischtes der Vertikallamellenanlage 60, als auch die dynamische Last bei auftretenden Windlasten.

Der elektrische Antrieb der Vertikallamellenanlage 60 wird von dem in die Terrassenüberdachung 1 integrierten Akkumulator mit elektrischer Energie versorgt. Hierdurch ist ein Anschluss an ein elektrisches Versorgungsnetz entbehrlich.

Durch ein Verstellen der Lamellen der Vertikallamellenanlage 60 kann der Raum unterhalb der Terrassenüberdachung 1 belüftet werden.

Ferner weist die Terrassenüberdachung 1 einen integrierten Wechselrichter auf, mittels dessen der von den Photovoltaikmodulen 40 erzeugte Gleichstrom in Wechselstrom gewandelt wird. Weiter ist an einem Pfosten 8, 9, 9` der Terrassenüberdachung 1 eine Steckdose angeordnet, die mit 230 V Wechselstrom zum Anschluss eines elektrischen Verbrauchers beaufschlagt ist und die direkt über die Photovoltaikmodule und/oder über einen in die Terrassenüberdachung 1 integrierten Akkumulator mit elektrischer Energie versorgt wird.

Die Seitenwandelemente 30 sind somit als lastabtragende Bauteile der Terrassenüberdachung 1 ausgebildet und nehmen die statische und dynamische Last der Bauelemente 55, 60 auf, die oberhalb der Seitenwandelemente 30 montiert sind, d.h. insbesondere die dynamische Last bei auftreffenden Windlasten. Dabei bilden die Seitenwandelemente 30 eine umlaufende Brüstung.

## Patentansprüche

1. Terrassenüberdachung (1) mit einem aus mehreren Trägern (3, 4) gebildeten Rahmen, der eines oder mehrere Dachelemente aufnimmt, wobei die Terrassenüberdachung (1) zumindest ein Seitenwandelement (30) aufweist, **dadurch gekennzeichnet, dass** das zumindest eine Seitenwandelement (30) zumindest ein integriertes Photovoltaikmodul (40) aufweist oder durch ein Photovoltaikmodul (40) gebildet ist.

2. Terrassenüberdachung (1) nach Anspruch 1, **dadurch gekennzeichnet, dass** die Terrassenüberdachung (1) mehrere Seitenwandelemente (30) an mehreren Seiten aufweist, wobei die Seitenwandelemente (30) jeweils zumindest ein Photovoltaikmodul (40) aufweisen.

3. Terrassenüberdachung (1) nach Anspruch 1 oder 2, **dadurch gekennzeichnet, dass** mehrere Photovoltaikmodule (40) in Reihe geschaltet sind, insbesondere mit einer Spannung von bis zu 120 V.

4. Terrassenüberdachung (1) nach einem der vorherigen Ansprüche, **dadurch gekennzeichnet, dass** eines oder mehrere Seitenwandelemente (30) eine insbesondere umlaufende Brüstung bilden.

5. Terrassenüberdachung (1) nach einem der vorherigen Ansprüche, **dadurch gekennzeichnet, dass** eines oder mehrere Seitenwandelemente (30) eine Brüstung bilden, wobei die Brüstung ein lastabtragendes Bauteil der Terrassenüberdachung (1) bildet, insbesondere dass oberhalb der Brüstung Glaselemente (55) und/oder Dreh-/Schiebeelemente und/oder Vertikallamellen (60) und/oder Beschattungselemente (50) angeordnet sind, deren statische und dynamische Last zumindest teilweise von der Brüstung aufgenommen wird.

6. Terrassenüberdachung (1) nach einem der vorherigen Ansprüche, **dadurch gekennzeichnet, dass** die Terrassenüberdachung (1) zumindest einen Wechselrichter und/oder zumindest einen Akkumulator aufweist, der von dem/den Photovoltaikmodul/en (40) gespeist wird.

7. Terrassenüberdachung (1) nach einem der vorherigen Ansprüche, **dadurch gekennzeichnet, dass** der Rahmen (3, 4) von mehreren Pfosten (8, 9, 9`) getragen wird, wobei zumindest ein Pfosten (8, 9, 9`) integrierte Kabelkanäle zur Aufnahme von Anschlusskabeln des/der Photovoltaikmodul/e (40) und zumindest eine Steckdose aufweisen, insbesondere eine Gleichspannungssteckdose mit einer Betriebsspannung von 12 V oder von 24 V und/oder eine Wechselspannungssteckdose mit einer Betriebsspannung von bis zu 230 V.

8. Terrassenüberdachung (1) nach einem der vorherigen Ansprüche, **dadurch gekennzeichnet, dass** die Photovoltaikmodule (40) der Seitenwandelemente (30) von Glashalteleisten gehalten werden, wobei die Glashalteleisten integrierte Kabelkanäle zur Aufnahme von Anschlusskabeln der Photovoltaikmodule (40) aufweisen und/oder wobei die Glashalteleisten zumindest abschnittsweise als Stromschienen ausgebildet sind.

9. Terrassenüberdachung (1) nach einem der vorherigen Ansprüche, **dadurch gekennzeichnet, dass** der Rahmen mittels eines Wandanschlussprofils an einer Gebäudewand befestigbar ist, wobei das Wandanschlussprofil zumindest einen integrierten Wechselrichter aufweist.

10. Terrassenüberdachung (1) nach einem der vorherigen Ansprüche, **dadurch gekennzeichnet, dass** einzelne oder mehrere Dachelemente durch Lamellen gebildet sind, die an dem Rahmen jeweils um eine Drehachse verschwenkbar gelagert sind, wobei die Lamellen von einer Schließstellung, in der die Lamellen eine geschlossene Dachfläche bilden, in eine insbesondere beliebige Öffnungsstellung verschwenkbar sind, insbesondere dass die Lamellen einen Teil der Dachfläche oder die vollständige Dachfläche bilden, insbesondere dass die Lamellen Photovoltaikmodule aufweisen.

11. Terrassenüberdachung (1) nach einem der vorherigen Ansprüche, **dadurch gekennzeichnet, dass** an dem Rahmen mehrere Dachelemente mit integrierten Dachflächenphotovoltaikmodulen oder mehrere Dachflächenphotovoltaikmodule angeordnet sind, die von an Sparren (7) angeordneten Glashalteleisten aufgenommen sind, wobei die Dachelemente einen Teil der Dachfläche oder die vollständige Dachfläche bilden und die Glashalteleisten integrierte Kabelkanäle zum Anschluss der Dachflächenphotovoltaikmodule aufweisen und/der wobei die Glashalteleisten zumindest abschnittsweise als Stromschienen ausgebildet sind.

12. Terrassenüberdachung (1) nach einem der vorherigen Ansprüche, **dadurch gekennzeichnet, dass** an dem Rahmen mehrere Dachelemente mit integrierten Dachflächenphotovoltaikmodulen oder mehrere Dachflächenphotovoltaikmodule befestigt sind, wobei mehrere Dachflächenphotovoltaikmodule in Reihe geschaltet sind, insbesondere mit einer Spannung von bis zu 120 V.

13. Terrassenüberdachung (1) nach einem der vorherigen Ansprüche, **dadurch gekennzeichnet, dass** die Terrassenüberdachung (1) zumindest einen elektrischen Verbraucher aufweist, insbesondere ein elektrisch angetriebenes Sonnenschutzelement (50, 60), der von zumindest einem in die Terrassenüberdachung (1) integrierten Akkumulator gespeist wird, wobei der Akkumulator von den Photovoltaikmodulen und/oder von Dachflächenphotovoltaikmodulen geladen wird.

14. Terrassenüberdachung (1) nach einem der vorherigen Ansprüche, **dadurch gekennzeichnet, dass** die Terrassenüberdachung (1) zumindest eine Steckdose zum Anschluss elektrischer Verbraucher aufweist, wobei die Steckdose von zumindest einem in die Terrassenüberdachung (1) integrierten Akkumulator gespeist wird, wobei der Akkumulator von den Photovoltaikmodulen (40) geladen wird, und/oder wobei die Steckdose unmittelbar von den Photovoltaikmodulen (40) über zumindest einen in die Terrassenüberdachung (1) integrierten Wechselrichter gespeist wird, insbesondere mit einer Wechselspannung von bis zu 230 V.

15. Terrassenüberdachung (1) nach einem der vorherigen Ansprüche, **dadurch gekennzeichnet, dass** die Terrassenüberdachung (1) zumindest eine Beleuchtungseinrichtung und/oder zumindest einen WLAN-Repeater aufweist, die/der unmittelbar von den Photovoltaikmodulen (40) gespeist wird und/oder die/der von zumindest einem in die Terrassenüberdachung (1) integrierten Akkumulator gespeist wird, wobei der Akkumulator von den Photovoltaikmodulen (40) geladen wird.
